# EUROPEAN PATENT APPLICATION

(11) **EP 1 111 938 A2**
(43) Date of publication of application: **27.06.2001**
(21) Application number: 00126460.5
(22) Date of filing: 07.12.2000
(51) Int. Cl.: H04Q 3/00, H04M 7/00

(54) **System and method of interworking TCP/IP and SS7**

(30) Priority: 21.12.1999 US 468596
(71) Applicant: Alcatel USA Sourcing, L.P., Plano, Texas 75075-5813 (US)
(72) Inventor: Copley, Jeffrey D., Garland, Texas 75043 (US)
(74) Representative: Dreiss, Fuhlendorf, Steimle & Becker

(57) **Abstract**

The present invention includes a system and method of interworking a cellular network (10) and an SS7 network (14). The method includes the steps of receiving, on a TCP/IP port, an TCAP message (22) sent from the cellular network (10), determining SS7 provisioning data for the TCP/IP port, determining a destination in the SS7 network (14) according to the SS7 provisioning data, adding SS7 message parameter fields and data to the TCAP message (22) and generating an SS7 message (26), and sending the SS7 message (26) to the destination in the SS7 network (14).

## Description

### TECHNICAL FIELD OF THE INVENTION

This invention is related in general to the field of telecommunications equipment. More particularly, the invention is related to a system and a method of interworking TCP/IP (Transmission Control Protocol/Internet Protocol) and SS7 (Signalling System Number 7).

### BACKGROUND OF THE INVENTION

Cellular or wireless technologies and networks are one of the fastest growing areas of telecommunications which has resulted in the creation of many new wireless companies. With the fast growth of this industry, the need for cellular company interconnection has risen quickly. The conventional method for this interconnectivity is via Signalling System Number 7 (SS7) networks, which is extensive and well-established across the United States. Typically, the wireless networks support the cellular IS41 Transaction Capabilities Application Part (TCAP) messages utilizing X.25 data links and TCP/IP over Ethernet.

The conversion to SS7 by wireless companies is a major and costly undertaking for many of these companies. Since the need for interconnectivity is urgent, alternate more economical methods of accessing the SS7 network is eagerly sought by these wireless companies.

### SUMMARY OF THE INVENTION

Accordingly, there is a need for a system and method to interwork the cellular network with the SS7 network.

In one aspect of the invention, a system and method of interworking a cellular network and an SS7 network. The method includes the steps of receiving, on a TCP/IP port, a TCAP message sent from the cellular network, determining SS7 provisioning data for the TCP/IP port, determining a destination in the SS7 network according to the SS7 provisioning data, adding SS7 message parameter fields and data to the TCAP message and generating an SS7 message, and sending the SS7 message to the destination in the SS7 network.

In another aspect of the invention, a method of interworking a cellular network and an SS7 network includes the steps of receiving an SS7 query message from the SS7 network, determining a processor for processing the SS7 query message based on a signal transfer point address and a subsystem number, assigning a new TCAP transaction identifier, and selecting a TCP/IP port. The MTP information and SCCP information are then extracted from the SS7 message and stored according to the new TCAP transaction identifier and the selected TCP/IP port. A TCAP portion of the SS7 message is sent as a TCAP query message to the cellular network on the selected TCP/IP port, where the TCAP query message contains the new TCAP transaction identifier.

In yet another aspect of the invention, a cellular network and SS7 network interworking system includes a plurality of interconnected processor clusters, where a first processor cluster is coupled to the SS7 network and operable of receiving and sending SS7 messages over SS7 link sets. A second processor cluster is coupled to the cellular network and operable of receiving and sending TCAP messages on TCP/IP over Ethernet. The first and second processor clusters are operable to receive SS7 messages from the SS7 network, converting the SS7 messages to TCAP messages and sending the resultant TCAP messages to a cellular network destination, and to receive TCAP messages from the cellular network, converting the TCAP messages to SS7 messages and sending the resultant SS7 messages to an SS7 network destination.

### BRIEF DESCRIPTION OF THE DRAWINGS

For a better understanding of the present invention, reference may be made to the accompanying drawings, in which:
FIGURE 1 is a simplified block diagram of connecting a cellular network to an SS7 network via a TCP/IP over Ethernet link constructed according to an embodiment of the present invention;
FIGURE 2 is a simplified message flow diagram of messages transmitted between the SS7 network and an IS41 TCAP network according to an embodiment of the present invention;
FIGURE 3 is a simplified system block diagram of an signal transfer point (STP) constructed according to two embodiment of the present invention;
FIGURE 4 is a message format diagram of an SS7 message; and
FIGURE 5 is a message format diagram of the address indicator of an SS7 message.

### DETAILED DESCRIPTION OF THE INVENTION

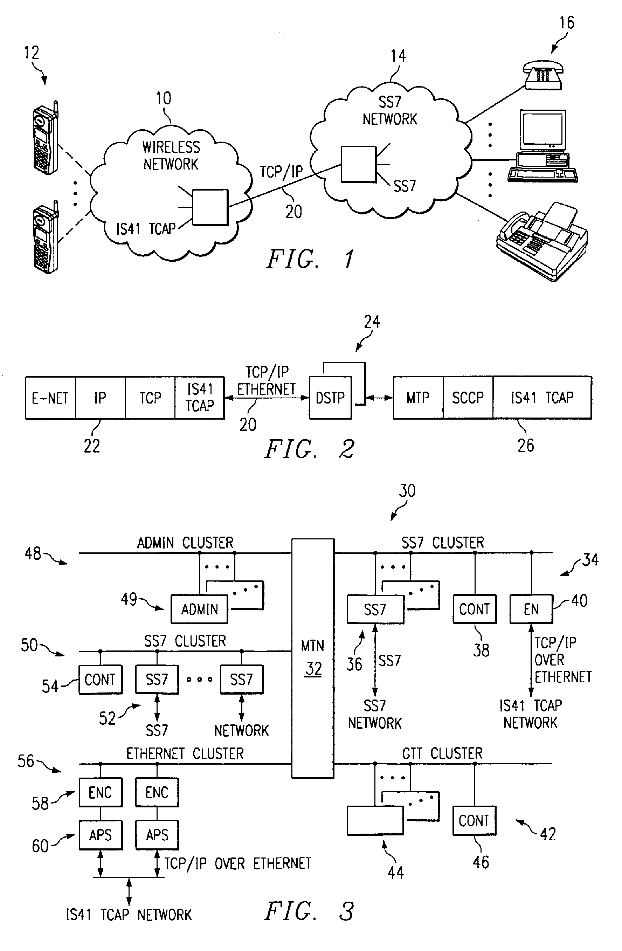

FIGURE 1 is a simplified block diagram of connecting a cellular network 10 to an Signalling System Number 7 (SS7) network 14 via a TCP/IP (Transmission Control Protocol/Internet Protocol) over Ethernet link 20 constructed according to an embodiment of the present invention. Cellular network 10 services many cellular telephone handsets 12 by using United States Cellular Standard IS41 Transaction Capabilities Application Part (TCAP) messages. Telecommunications network 14 services many telecommunications customer premises equipment, such as telephones, facsimile machines, modems, etc., by using SS7 messages.

Referring also to FIGURE 2, the present invention provides interworking of IS41 TCAP messages between TCP/IP over Ethernet (20) and SS7. These messages include query and reply messages, which may originate and terminate in either network. IS41 TCAP query messages 22 including an Ethernet header (E-net), an Internet Protocol (IP) header, and TCAP, received on TCP/IP ports on one of a mated pair of signal transfer points (STP) 24, are transmitted to the SS7 network by the STP. Similarly, SS7 messages are received by the STP and converted to IS41 TCAP messages and transmitted to the cellular network. Both IS41 TCAP and SS7 messages may include query messages or reply messages.

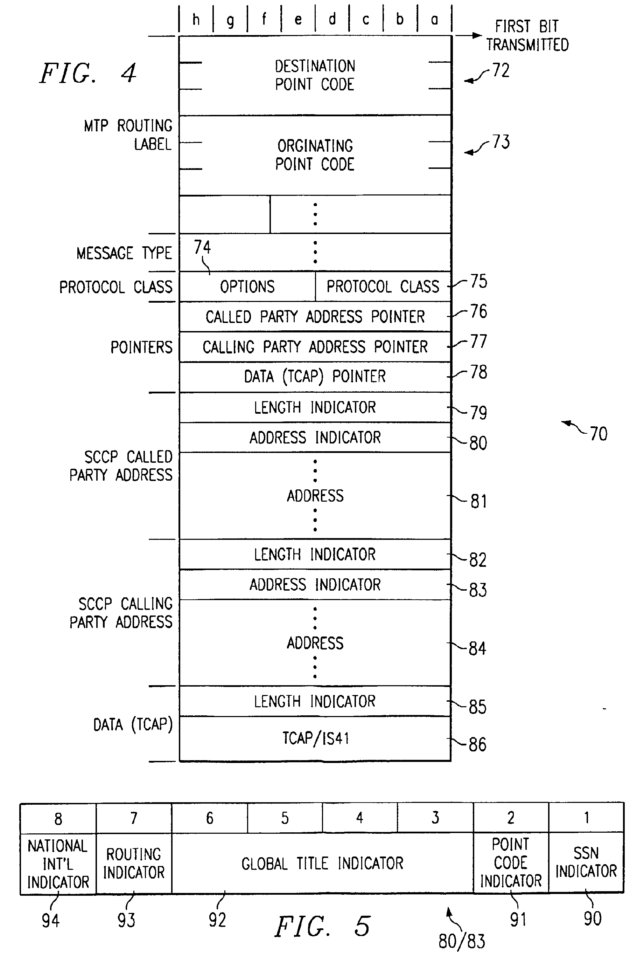

FIGURE 3 is a simplified system block diagram of a signal transfer point (STP) 30 constructed according to the embodiments of the present invention. System 30 includes a message transport network 32 which serves to interconnect the several processor clusters of system 30. Messages are transmitted between the processor clusters via message transport network 32. Administrative cluster 48 includes one or more processors 49 which oversee the operations of system 30. Two exemplary embodiments are shown in FIGURE 3. SS7 cluster 34 represents one exemplary embodiment and SS7 cluster 50 and Ethernet cluster 56 represent the second exemplary embodiment.

SS7 cluster 50 includes several interconnected processors 52 and 54. SS7 processors 52 are coupled to the SS7 network to receive and transmit SS7 messages and are under the control of a controller 54. Ethernet cluster 56 includes at least a redundant pair of Ethernet controllers (ENC) 58 coupled to a redundant pair of application servers (APS) 60. Application servers 60 are bridged together and to the TCP/IP network using TCP/IP over Ethernet.

SS7 cluster 34 also includes several interconnected processors 36, 38, and 40. SS7 processors 36 are coupled to the SS7 network to receive and transmit SS7 messages under the control of a controller 38. At least one Ethernet processor 40 is coupled to SS7 processors 36 and controller 38 in the same cluster. Ethernet processor 40 is coupled to the cellular network using TCP/IP over Ethernet.

System 30 further includes a GTT cluster 42 coupled to message transport network 32. GTT cluster 42 includes one or more GTT processors 44 which perform global title translation functions under the control of a controller 46.

FIGURE 4 is a message format diagram of an SS7 message 70 as specified by *Bell Communications Research Specification of Signalling System Number 7,* Bell Communications Research, TR-NWT-000246, Issue 2, Revision 2, December 1992. For the purpose of describing the present invention, only a relevant subset parameter fields are discussed below. SS7 message 70 includes an MTP routing label that includes a destination point code (DPC) 72 and an originating point code (OPC) 73. A protocol class parameter includes an options parameter field 74 and a protocol class parameter field 75. The pointers parameter includes a called party address pointer parameter field 76, calling party address pointer parameter field 77, and a data (TCAP) pointer parameter field 78. SS7 message 70 further includes an SCCP called party address parameter which includes a length indicator parameter field 79, an address indicator parameter field 80, and an address parameter field 81. An SCCP calling party address parameter also includes a length indicator parameter field 82, an address indicator parameter field 83, and an address parameter field 84. SS7 message 70 further includes a data (TCAP) parameter that includes a length indicator parameter field 85 and an IS41 TCAP parameter field 86. Subsequent description of the detailed operations of the present invention will refer to the parameters and parameter fields shown in FIGURE 4.

FIGURE 5 is a message format diagram of the address indicator parameter field 80 or 83 of the called party address parameter or the calling party address parameter of an SS7 message. The address indicator indicates the type of address information contained in the address field. The address consists of one or any combination of the following elements: signalling point code, global title, and subsystem number. Bit 1 of the address indicator parameter is a subsystem number (SSN) indicator field 90. The subsystem number indicates the particular subsystem or processor for processing the message. A "1" in bit 1 indicates that the address contains a subsystem number. Bit 2 of the address indicator parameter is a signaling point code field 91. A "1" in bit 2 indicates that the address contains a signaling point code. Bits 3-6 of the address indicator parameter contain the global title indicator field 92. A "0000" in this field indicates that no global title is included; a "0010" in this field indicates that the global title includes a translation type. When a global title is used in the called party address, the called party address should also contain a subsystem number. Bit 7 of the address indicator parameter is a routing indicator field 93, which identifies which address element should be used for routing. A "0" in bit 7 indicates that an SCCP translation is required and therefore the routing should be based on the global title in the address. A "1" in bit 7 indicates that routing should be based on the DPC in the MTP routing label and the SSN in the called party address. Bit 8 of the address indicator parameter designated whether the address is national or international. A "0" in bit 8 indicates that the address is international and that both the address indicator and the address are coded according to international specifications. A "1" in bit 8 indicates that the address is national and that both the address indicator and the address are coded according to national specifications.

For each TCP/IP port located in the STP, the destination point code, the SCCP calling party address subsystem number, and specification of whether global title translation is required, are required in the provisioning for the port. If global title translation is not specified for the TCP/IP port, the SCCP called party address subsystem number is also required in the provisioning for the port. If global title translation is specified for the TCP/IP port, the translation type is also required in the provisioning for the port.

Apparatus and method of interworking TCP/IP and SS7 of the present invention is operable to process IS41 TCAP query messages received from the cellular network, SS7 reply messages received from the SS7 network, SS7 query messages received from the SS7 network, and IS41 TCAP reply messages received from the cellular network.

In general, to convert an IS41 TCAP message to an SS7 message, SS7 information, including MTP (Message Transfer Part), and SCCP (Signalling Connection Control Part), is added to the IS41 TCAP message. The SS7 information is added according to SS7 parameters provisioned to the TCP/IP port where the IS41 TCAP message was received. The destination used for routing the resultant SS7 message is determined using provisioned data. The provisioned data contains either the actual destination point code (DPC) in the MTP or the needed information for SCCP to perform global title translation that results in an MTP destination. The resultant SS7 message is then sent to the SS7 network. The SS7 link selection for sending the SS7 message is performed according to signalling link load sharing algorithms described in TR-NWT-000246.

If provisioning for the particular TCP/IP port specifies that global title translation is not required, then all messages received on that port are formatted and then sent to the destination indicated by the DPC provisioned to the TCP/IP port. In particular, protocol class parameter field 75 is coded "0000" to indicate a class 0 message and the protocol class option field 74 is coded "0000" to indicate "discard message on error". Bit 1 of address indicator 80 in the called party address parameter is coded with a "1" to indicate that the address contains a subsystem number. The called party subsystem number provisioned to the TCP/IP port is populated into the subsystem number field of the SCCP called party address field. For this instance, the format of address 81 is as shown in Table A:

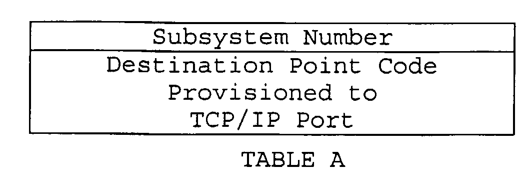

Furthermore, bit 2 may be coded with a "0" or "1". If bit 2 is coded a "1", then the provisioned DPC is inserted in the DPC field shown in Table A. If bit 2 is coded "0", the field is left out of the message. Bits 3-6 of address indicator 80 are coded with "0000" to indicate no global title is included. Bit 7 of address indicator 80 is coded with "1", and bit 8 of address indicator 80 is also coded with "1". Because bit 7 is "1", it indicates that routing should be based on the DPC in the MTP routing label and the subsystem number in the called party address. In addition to populating the called party address, the calling party address must also be populated. In particular, bit 1 of address indicator 83 in the calling party address parameter is coded with a "1" to indicate that the address contains a subsystem number. Bit 2 is coded with a "1" to indicate the address contains a signalling point code. Bits 3-6 of address indicator 83 are coded with "0000" to indicate no global title is included. Bit 7 of address indicator 83 is coded with "1", and bit 8 of address indicator 83 is also coded with "1". The first octet of SCCP Calling Party Address field 84 is populated with the provisioned calling party subsystem number. The next three octets are populated with the DPC assigned to STP 30. The resultant format of field 84 is a shown in Table B.

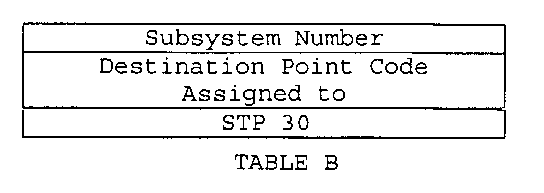

The message is then passed to a controller for SS7 processing and delivery into the SS7 network. If global title translation is specified for the particular TCP/IP port, a mobile identification number (MIN) is extracted from the IS41 TCAP message. The MIN digits are placed in the SCCP called party address (CdPA) of the SS7 message along with other provisioned data. The message is then delivered to the specified DPC where SCCP global title translation is performed. In particular, the DPC provisioned is inserted into the MTP routing label's DPC field 72. The protocol class parameter field 75 is coded "0000" to indicate class 0 message and protocol class option field 74 is coded "0000" to indicate "discard message on error". The first octet of the called party address parameter field 81 is populated with the translation type provisioned to the TCP/IP port. Starting with the next octet, the called party address parameter field 81 is populated with the MIN digits obtained from the IS41 TCAP message. The present invention is capable to obtain the MIN digits from the IS41 TCAP portion of the message containing the operations shown in TABLE C:

**TABLE C**

| Operation | IS41 [2] Section | Operation | IS41 [2] Section |
|---|---|---|---|
| QualificationRequest | 8.1.3.1. | ServiceProfileRequest | 8.1.3.8 |
| *QualificationDirective* | 8.1.3.2 | *ServiceProfileDirective* | 8.1.3.9 |
| *QualificationNotification* | 8.1.3.3 | *TransferToNumberRequest* | 8.1.3.10 |
| *RegistrationCancellation* | 8.1.3.4 | *CSSInactive* | 8.1.3.11 |
| *RemoteFeatureControlRequest* | 8.1.3.7 | *RedirectionRequest* | 8.1.3.12 |

Furthermore, bit 1 of the address indicator of the called party address parameter is coded with a "1" to indicate that the address contains a subsystem number. Bit 2 may be coded with a "0" or "1". Bits 3-6 of the address indicator are coded with "0010" to indicate that the global title includes a translation type. Bit 7 of the address indicator is coded with "0", and bit 8 of the address indicator is also coded with "1". Because bit 7 is coded "0", it indicates that routing should be based on the global title parameter field in the called party address. In addition to populating the called party address, the calling party address is populated as aforementioned. The populated message is then passed to a controller for SS7 processing. The DPC provisioned to the TCP/IP port that was placed in the routing label of the message is checked to see if it is the same address as the SS7 network address assigned to STP 30 or an SS7 address of some other SS7 element. If the provisioned DPC is equal to the SS7 network address of STP 30, then global title translation is performed at STP 30 per normal SCCP procedures using the MIN digits to determine the destination. Upon completion of global title translation, STP 30 routes the message into the SS7 network based on the DPC derived as a result of global title translation. If the DPC provisioned to the TCP/IP port is not the same as the SS7 network address of STP 30, then STP 30 routes the message to the DPC specified in the routing label.

In general, SS7 messages received from the SS7 network are routed according to the content of the message. Using direct SS7 addressing, the SS7 message is addressed to the STP and a particular processor on the STP indicated by a subsystem number (SSN) in the message. Using global title translation, the address of the STP and an SSN are obtained by translation the information provided in the SCCP called party address. Upon message reception and processing using either method, the SSN in the message is used to deliver the message to a particular processor or server located in the STP. The processor then sends the IS41 TCAP portion of the SS7 message over an available TCP/IP port where the receiving node in the TCP/IP network processes the message.

Per normal SS7 procedures, each SS7 message received at the STP is examined and routed according to the information received in the message. If the received SS7 message contains the DPC assigned to the STP, and the message is an SCCP message as determined by normal SS7 procedures, the message is further processed by SCCP. If routing based on DPC and subsystem number, the message is delivered to the particular processor or APS assigned to the subsystem number. Alternatively, if global title translation is specified, global title translation is performed. The result of the global title translation is the address of the STP and the SSN of the particular processor or APS, and the message is delivered to the APS for processing. APS processing interogates the message further to determine proper message handling. If APS processing determines that query with permission is specified, which identifies the message as a query message, then a unique and new TCAP transaction identifier is generated and assigned to this transaction. A TCP/IP port is then selected for delivery of the message. The MTP data, SCCP data, the selected TCP/IP port number, and the new TCAP transaction identifier are stored at the APS. The new TCAP transaction ID is then inserted into the proper parameter field of the IS41 TCAP portion of the SS7 message. The resultant IS41 TCAP message is then sent over the selected TCP/IP port to the cellular network. When a reply IS41 TCAP message is received, the TCAP transaction identifier and TCP/IP port number are used to look up the stored MTP data and SCCP data. The APS then packages the reply message with the retained SS7 information and sends the message to the SS7 network destination. The stored SS7 information is kept until a reply message is received or at the expiration of a predetermined time T1. TCAP timer T1 is provisionable on a per TCP/IP port basis.

The TCP/IP network returns the reply message on the same TCP/IP port as where the query message was sent. The same APS that processed the SS7 query message and converted it into an IS41 TCAP query message receives the response and envelopes the response according to the stored SS7 information. The APS uses the TCP/IP port number and the TCAP transaction identifier to look up the stored SS7 information. Any reply message that contains a TCAP transaction identifier and TCP/IP port combination that produces a failure in the look up is rejected. If a message is rejected, a TCAP REJECT message is sent to the originator. The stored SS7 message includes SCCP calling party address which is used to return the reply message to its SS7 destination. The stored SCCP calling party address information contains either a DPC and subsystem number or indication and the associated information to perform global title translation. If no addressing information is in the SCCP calling party address, then the OPC of the MTP routing label is used to return the message. The stored SS7 information for the reply message is modified so that the SCCP calling party address becomes the called party address and the called party address becomes the calling party address. The point code of the STP is inserted as the OPC in the MTP routing label. The resultant SS7 response message is then delivered to the SS7 destination. The associated stored SS7 information is then deleted.

Response messages received from the SS7 network are delivered to the APS either addressed by the result of global title translation or by direct addressing. The APS removes the SS7 information from the reply message and delivers the remaining IS41 TCAP message to an available TCP/IP port. No SS7 information is retained.

As part of SCCP network management, in the event of local processor unavailability, an SSN Prohibited message indicating the SSN unavailability may be generated and sent to the appropriate signaling points. A message is not sent to remote subsystems if a notification of the remote subsystem's unavailability has been received.

It may be seen that the present invention provides interworking of IS41 TCAP messages between TCP/IP over Ethernet and SS7. This allows cellular companies to have the ability to quickly interconnect with existing SS7 networks and to take advantage of the benefits provided by SS7 networks.

Although several embodiments of the present invention and its advantages have been described in detail, it should be understood that mutations, changes, substitutions, transformations, modifications, variations, and alterations can be made therein without departing from the teachings of the present invention, the spirit and scope of the invention being set forth by the appended claims.

## Claims

1. A method of interworking a cellular network and an SS7 network, comprising:
receiving, on a TCP/IP port, an TCAP message sent from the cellular network;
determining SS7 provisioning data for the TCP/IP port;
determining a destination in the SS7 network according to the SS7 provisioning data;
adding SS7 message parameter fields and data to the TCAP message and generating an SS7 message; and
sending the SS7 message to the destination in the SS7 network.

2. The method, as set forth in claim 1, wherein determining a destination comprises:
obtaining a mobile identification number from the TCAP message;
placing the mobile identification number in an SCCP called party address parameter field of the SS7 message;
performing a global title translation on the mobile identification number; and
obtaining a destination point code of the destination in the SS7 network.

3. The method, as set forth in claim 1, wherein determining a destination comprises determining a destination point code for a message transfer part routing label from the SS7 provisioning data.

4. The method, as set forth in claim 1, wherein adding SS7 provisioning data comprises:
adding a message transfer part routing label parameter and data including a destination point code parameter field and an originating point code parameter field;
adding an SCCP called party address parameter and data; and
adding an SCCP calling party address parameter and data.

5. The method, as set forth in claim 4, wherein adding an SCCP called party address parameter and data comprises:
adding a length indicator parameter field and data;
adding an address indicator parameter field and data; and
adding an address parameter field and data.

6. The method, as set forth in claim 5, wherein adding an address indicator parameter field and data comprises:
adding an subsystem number indicator field and data;
adding a global title indicator field and data;
adding a routing indicator field and data; and
adding a national/international standard indicator field and data.

7. The method, as set forth in claim 6, wherein adding an address indicator parameter field and data further comprises:
populating the subsystem number indicator field with data to indicate the called party address contains a subsystem number;
populating the global title indicator field with data to indicate that global title includes translation type;
populating the routing indicator field with data to indicate that global title translation is required;
populating the national/international standard indicator field with data to indicate that the called party address is coded according to national standard specifications.

8. The method, as set forth in claim 4, wherein adding an SCCP calling party address parameter and data comprises:
adding a length indicator parameter field and data;
adding an address indicator parameter field and data; and
adding an address parameter field and data.

9. The method, as set forth in claim 8, wherein adding an address indicator parameter field and data comprises:
adding an subsystem number indicator field and data;
adding a global title indicator field and data;
adding a routing indicator field and data; and
adding a national/international standard indicator field and data.

10. The method, as set forth in claim 9, wherein adding an address indicator parameter field and data further comprises:
populating the subsystem number indicator field with data to indicate the calling party address contains a subsystem number;
populating the global title indicator field with data to indicate that no global title is included;
populating the routing indicator field with data to indicate that routing is based on the destination point code in the message transfer part routing label;
populating the national/international standard indicator field with data to indicate that the called party address is coded according to national standard specifications.

11. The method, as set forth in claim 1, further comprising:
receiving an SS7 message in response to the sent SS7 message;
removing the SS7 message parameter fields and data from the received SS7 message; and
sending a remaining TCAP portion of the SS7 message as a TCAP response message over an available TCP/IP port to the cellular network.

12. A method of interworking a cellular network and an SS7 network, comprising:
receiving an SS7 query message from the SS7 network;
determining a processor for processing the SS7 query message based on a signal transfer point address and a subsystem number;
assigning a new TCAP transaction identifier;
selecting a TCP/IP port;
extracting MTP information and SCCP information from the SS7 message and storing the extracted information according to the new TCAP transaction identifier and the selected TCP/IP port; and
sending a TCAP portion of the SS7 message as a TCAP query message to the cellular network on the selected TCP/IP port, the TCAP query message containing the new TCAP transaction identifier.

13. The method, as set forth in claim 12, further comprising:
receiving, on a TCP/IP port, a TCAP response message sent from the cellular network;
looking up the stored MTP and SCCP information according to the TCP/IP port and TCAP transaction identifier contained in the TCAP response message;
adding the stored MTP and SCCP information to the TCAP response message to generate an SS7 response message;
determining a destination for the SS7 response message according to the MTP and SCCP information; and
sending the SS7 response message to the destination.

14. The method, as set forth in claim 13, wherein determining a destination comprises:
obtaining an SCCP calling party address in the SCCP information; and
obtaining an originating point code in the MTP information in response to an absence of the SCCP calling party address.

15. The method, as set forth in claim 13, further comprising swapping an SCCP calling party address with an SCCP called party address.

16. The method, as set forth in claim 13, further comprising deleting the stored MTP and SCCP information after the SS7 response message is sent.

17. A cellular network and SS7 network interworking system, comprising:
a plurality of interconnected processor clusters;
a first processor cluster being coupled to the SS7 network and operable of receiving and sending SS7 messages over SS7 link sets;
a second processor cluster being coupled to the cellular network and operable of receiving and sending TCAP messages on TCP/IP over Ethernet; and
the first and second processor clusters being operable to receive SS7 messages from the SS7 network, converting the SS7 messages to TCAP messages and sending the resultant TCAP messages to a cellular network destination, and to receive TCAP messages from the cellular network, converting the TCAP messages to SS7 messages and sending the resultant SS7 messages to an SS7 network destination.

18. The system, as set forth in claim 17, wherein the first and second processor clusters are operable for determining SS7 provisioning data for the TCP/IP port, determining a destination in the SS7 network according to the SS7 provisioning data, and adding SS7 message parameter fields and data to the TCAP message and generating an SS7 message.

19. The system, as set forth in claim 18, wherein the first and second processor clusters are operable for receiving an SS7 message in response to the sent SS7 message, removing the SS7 message parameter fields and data from the received SS7 message, and sending a remaining TCAP portion of the SS7 message as a TCAP response message over an available TCP/IP port to the cellular network.

20. The system, as set forth in claim 17, wherein the first and second processor clusters are operable for receiving an SS7 query message from the SS7 network, assigning a new TCAP transaction identifier, selecting a TCP/IP port, extracting MTP information and SCCP information from the SS7 message and storing the extracted information according to the new TCAP transaction identifier and the selected TCP/IP port, and sending a TCAP portion of the SS7 message as a TCAP query message to the cellular network on the selected TCP/IP port, the TCAP query message containing the new TCAP transaction identifier.

21. The system, as set forth in claim 20, wherein the first and second processor clusters are operable for receiving, on a TCP/IP port, a TCAP response message sent from the cellular network, looking up the stored MTP and SCCP information according to the TCP/IP port and TCAP transaction identifier contained in the TCAP response message, adding the stored MTP and SCCP information to the TCAP response message to generate an SS7 response message,
determining a destination for the SS7 response message according to the MTP and SCCP information, and sending the SS7 response message to the destination.

22. The system, as set forth in claim 20, wherein the first and second processor clusters are the same processor cluster.
